(19) Europäisches Patentamt
European Patent Office
Office européen des brevets

(11) **EP 1 462 762 B1**

(12) **EUROPEAN PATENT SPECIFICATION**

(45) Date of publication and mention
of the grant of the patent:
**03.11.2010 Bulletin 2010/44**

(51) Int Cl.:
***G01C 11/02*** *(2006.01)*

(21) Application number: **04007207.6**

(22) Date of filing: **25.03.2004**

(54) **Circumstance monitoring device of a vehicle**

Vorrichtung zur Umgebungserfassung eines Fahrzeugs

Dispositif pour détecter l'environnement d'un véhicule

(84) Designated Contracting States:
**DE FR GB**

(30) Priority: **25.03.2003 FR 0303630**

(43) Date of publication of application:
**29.09.2004 Bulletin 2004/40**

(73) Proprietor: **AISIN SEIKI KABUSHIKI KAISHA**
**Kariya-shi, Aichi-ken, 448-8650 (JP)**

(72) Inventors:
• **Bougnoux, Sylvain**
**06220 Vallauris (FR)**
• **Fintzel, Katia**
**06110 Le Cannet (FR)**
• **Vestri, Christophe**
**06700 Saint-Laurent du Var (FR)**
• **Bendahan, Remy**
**06160 Juan les Pins (FR)**

• **Yamamoto, Shuji**
**Toyota-shi**
**Aichi-ken (JP)**
• **Kakinami, Toshiaki**
**Nagoya-shi**
**Aichi-ken (JP)**

(74) Representative: **Kramer - Barske - Schmidtchen**
**European Patent Attorneys**
**Landsberger Strasse 300**
**80687 München (DE)**

(56) References cited:
**EP-A- 1 005 234     EP-A- 1 094 337**
**EP-A- 1 288 072**

• **FINTZEL K ET AL: "3D vision system for vehicles"**
**2003, PISCATAWAY, NJ, USA, IEEE, USA, 9 June**
**2003 (2003-06-09), pages 174-179, XP002285561**
**ISBN: 0-7803-7848-2**

**Description**

The present invention relates to circumstance monitoring devices for use in vehicles, in particular as a parking assistance for automobiles. Specifically, automated driving systems have been developed in view of collision avoidance, and image technology can be useful in this area. In fact, image technology provides additional information to the driver of a vehicle to more easily understand driving or parking situations.

For example, a backing assistance system using a rear video camera is already known. This system, as well as generally known systems, uses a video camera to provide a two-dimensional view to the driver of the vehicle so as to assist him during parking manoeuvres by displaying blind corners.

Several monitoring devices for targeting to display blind corners of a vehicle in accordance with driving conditions and conditions of surrounding environment of the vehicle have been disclosed. Some examples will be discussed hereafter.

The document Japanese Patent Laid-Open Publication No. S62-278477 discloses a system including a computer for calculating a driving locus of a vehicle based on an output signal from a distance sensor and a steering wheel angle sensor for displaying a position of obstacles surrounding the vehicle and an estimated driving locus.

The document Japanese Patent Laid-Open Publication No. H01-141137 discloses a rear view monitoring device for a vehicle including an obstacle detection sensor provided on right and left portions of a front portion of the vehicle for detecting the approach to an obstacle to the right and the left portions of the front portion of the vehicle and for displaying the detected information on a monitor screen simultaneous with the rear view.

The document Japanese Patent Laid-Open Publication No. 2001-187553 discloses a device for calculating a distance between a vehicle to obstacles surrounding the vehicle based on images shot by a camera and for displaying a third image created based on the calculated data.

The document Japanese Patent Laid-Open Publication No. 2002-052999 discloses a relative position detection device for displaying a stopped vehicle position marker and a lateral direction distance measuring marker on a monitor screen superimposing one another and for detecting a relative position between the vehicle and a reference using images from camera and a steering angle sensor without applying a distance measuring sensor.

According to these known arts, the rear view of the vehicle is shot by the camera for display on a monitor. Notwithstanding, with these known arts, regions being out of a visual field of the camera such as the view at and around the comer of the vehicle cannot be displayed on the monitors. Thus, these prior art devices display in a limited manner the images in accordance with the driving condition and the condition surrounding the vehicle.

In order to obviate the foregoing drawbacks, a camera having an appropriate viewing angle may be mounted on the vehicle. However, providing such a camera may deteriorate the design depending on the vehicle type, so that this method cannot be applied to all types of vehicles.

The document Japanese Patent Laid-Open Publication No. H08-48198 discloses a device for estimating a position of a vehicle with a sensor provided on the vehicle and for informing a condition of the vehicle surroundings to an operator based on images showing a relative relationship between the vehicle and the surrounding environment.

However, this prior art device cannot construct three-dimensional information around the vehicle, because the described invention cannot display an image that is shot from an arbitral viewpoint around the vehicle, but instead displays at most two kinds of top view images.

The publication by Grün A., Wang X., 1999: CyberCity Spatial Information System (SIS): "A new concept for the management of 3D city models in a hybrid GIS", Proc. 20th Asian Conference on Remote Sensing, November, Hong Kong, pp. 121-128 discloses a virtual world consisting of virtual objects and world boundaries. The virtual objects consist of several textured or coloured elements, e.g. triangles. The world boundaries are far away from the scene elements; they are usually textured with sky texture, or some other scenery texture. In a virtual reality system, the realism of the scenery is acceptable since the boundaries of the scene are far away from the virtual object and the virtual camera position. Unfortunately, it is sometimes impossible to recover in real time the texture of the surrounding scenery, as well as the texture of the gap between distant scenery and the local object composing the scene.

Another publication is known, "3D Model Construction Using Range and Image Data submitted to CVPR 2000" by Ioannis Stamos and Peter K. Allen, Department of Computer Science, Columbia University, New York, NY 10027 and discloses an automatic scene modelling system. Unfortunately, this system does not deal with complex shapes such as necessitated by trees. Moreover, it requires range images (dense depth estimates), which are difficult to obtain in terms of cost and reliability.

A commercial example of a virtual reality system that deals with complex scene modelling and complex light synthesis is known at www.hotelbeausite.net. Unfortunately, this method known as panorama or mosaic reconstruction is in fact purely 2D. In fact, this system pretends to create a three-dimensional illusion as no depth is estimated. This system only allows rotating the virtual view around a fixed position, but does not allow for the virtual camera to change its position. As this system is purely 2D, it does not allow for a real virtual visit because the position of the virtual camera cannot be changed continuously in the scene.

As may be understood from the above, a major drawback of current back view 2D systems is that the driver can never see the whole scene at one time.

EP 1 094 337 A2 relates to systems for assisting a driver of a vehicle to park by an image around the vehicle and, more specifically, to a system for calculating a distance from the vehicle to a specific 3D object in an image picked up from the vehicle and advising the driver of what are located around the vehicle.

EP 1 288 072 A2 relates to a drive assist device for assisting a driving operation using images displayed on a screen.

EP 1 005 234 A2 relates to a three-dimensional scope system with a single camera for vehicles, wherein the three-dimensional scope system is capable of obtaining a distance between a target and a vehicle body based on data of two still pictures of the target obtained a different vehicle travelling positions by using a single camera.

The present invention thus-tries to overcome the foregoing drawbacks by providing a device allowing in a virtual reality system a full immersive feeling of being in the surrounding environment captured in real time. The disclosed technology is able to memorize in a 3D model, parts of the scene already observed from several shots taken while the vehicle is moving. Using this virtual 3D model, the scene can be observed by the driver from any point of view at each instant.

According to the present invention, it is possible to provide a driver with a partial three-dimensional (3D) representation of the scene surrounding his vehicle, and particularly of any obstacles located in this scene. The device can in fact remember part of the scene already acquired by a rear camera as a 3D model. This is very efficient to eliminate dead angles and to display obstacles not seen in the present 2D view that would be given by the camera. Furthermore, by making use of known computer graphic techniques, this model can be observed by the driver from any point of view to avoid collisions with obstacles.

Other features and advantages of the circumstance monitoring device according to the present invention will become clear from reading the following description, which is given solely by way of a non-limitative example thereby referring to the attached drawings in which:

- Figure 1 is a schematic diagram showing the structure of a first embodiment of a circumstance monitoring device according to the present invention,
- Figure 2 is a schematic diagram showing the structure of a second embodiment of a circumstance monitoring device according to the present invention,
- Figure 3 shows a perspective view of a vehicle equipped with a system for displaying the environment of a vehicle,
- Figure 4 is a schematic diagram showing in more detail the circumstance monitoring device of the vehicle containing an electronic control device ECD for displaying the environment of a vehicle
- Figure 5 shows the field of view of a backward mounted camera in a circumstance monitoring device,
- Figure 6 represents the geometrical relationship between two camera positions used for the three-dimensional reconstruction of feature points that represent objects in the space,
- Figure 7 represents an example of the tracking of feature points when considering the three-dimensional construction,
- Figure 8 is a schematic diagram showing an example of a tracking situation when considering the three-dimensional reconstruction,
- Figure 9 shows an example of the processing that may be used to reproduce an object from feature points when considering the three-dimensional reconstruction,
- Figure 10 is a flowchart of an example of the processing shown in Figure 9,
- Figure 11 is a schematic representation of a reconstructed virtual space surrounding a vehicle and having a side surface, a road surface and the feature points when considering the three-dimensional reconstruction,
- Figure 12 shows a presentation of the virtual environment,
- Figure 13 illustrates a method used to texture vertical elements of the virtual environment,
- Figure 14 represents schematically a vehicle model used for carrying out the present invention,
- Figure 15 shows an example of a method for detecting and tracking the position and orientation of a moving car based on the coordinates and direction of its starting point,
- Figure 16 shows an example of the processing to paste an image acquired by filming an object and reproduced in a three-dimensional space,
- Figure 17 shows an example of the processing to paste an image acquired by filming a road surface and reproduced in a three-dimensional space,
- Figure 18 shows an example of the processing to paste an image acquired by filming a wall surface and reproduced in a three-dimensional space,
- Figure 19 illustrates the adaptive properties of the virtual environment in an embodiment according to the present invention,
- Figure 20 shows an example of the processing used to construct an image to be displayed representing a virtual top view showing the environment around a vehicle,

- Figure 21 shows an example of the processing used to construct an image to be displayed representing the positional relationship between an object positioned in front of the vehicle and the front of the vehicle,
- Figure 22 shows an example of the processing used to construct an image to be displayed representing the positional relationship between an object positioned behind the vehicle and the back of the vehicle,
- Figure 23 shows an example of the processing used to construct an image to be displayed representing the positional relationship between an object positioned next to the side of the vehicle and the lateral side of the vehicle, and
- Figure 24 shows an example of the processing used to construct an image to be displayed representing the positional relationship between an object positioned around a comer with respect to the vehicle and the corner of the vehicle.

Detailed description of the invention

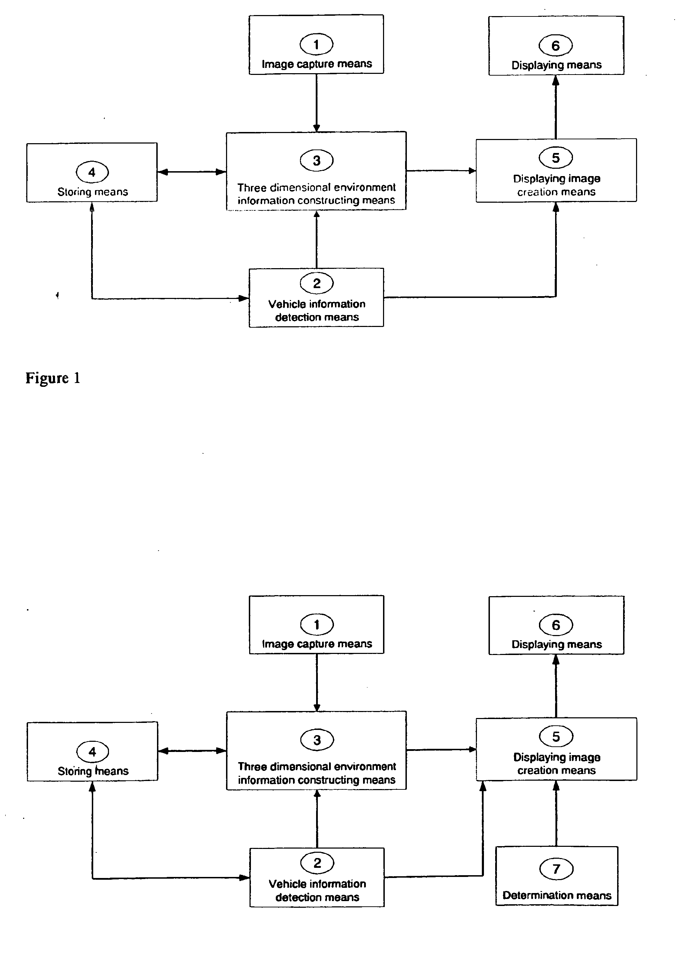

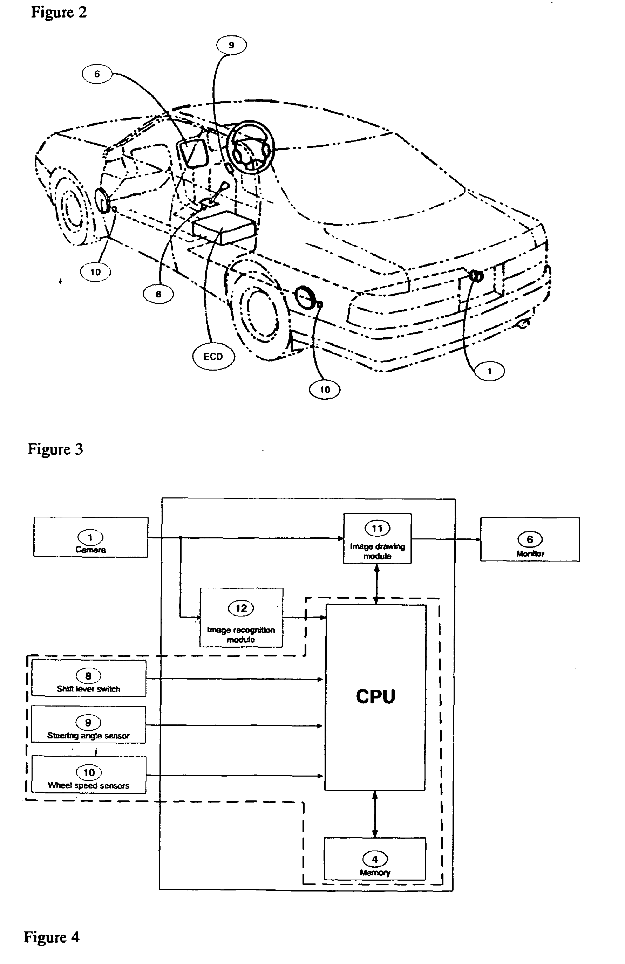

Fig. 1 shows a structure according to a first embodiment of a circumstance monitoring device according to the present invention of a vehicle. Figure 3 shows a corresponding circumstance monitoring device mounted on an automobile.

The circumstance monitoring device of the vehicle includes an image capture means 1, such as a video camera, provided on the vehicle for shooting an image of the environment surrounding the vehicle and for outputting the image information from the camera to a three-dimensional environment information constructing means 3. A vehicle information detection means 2 is further provided for consecutively detecting a moving state of the vehicle. Three-dimensional environment information constructing means 3 constructs three-dimensional environment information of the environment surrounding the vehicle based on the image shot by the image capture means 1. A storing means 4 is provided for storing at least one of the image information and the three-dimensional environment information. The circumstance monitoring device further includes a displaying image creation means 5 for creating a displaying image based on the three-dimensional environment information, and a display means 6 for displaying the displaying image. The displaying means 6 preferably includes a monitor mounted in the vehicle.

Fig. 2 shows the structure according to a second embodiment of a circumstance monitoring device according to the present invention of a vehicle. With the circumstance monitoring device of the vehicle according to the second embodiment, a determination means or set up means for determining a predetermined displaying image 7 is further included in addition to the structure of the first embodiment. Further, the displaying image creation means 6 of the second embodiment creates a plurality of displaying images for switching displaying images when needed according to the image determination results. In case an operator of the vehicle determines a predetermined displaying image, a mechanical switch or a touch panel on the monitor may be applied as the determination means.

When the determination means is constructed for automatically determining a displaying image based on the predetermined condition regarding the vehicle per se and the surrounding environment of the vehicle, the determination means is built in, for example, as a software for automatically determining the displaying image based on conditions such as whether the vehicle is approaching an obstacle of the surroundings of the vehicle, or based on the conditions such as the speed of the vehicle and an estimated moving locus of the vehicle. When the vehicle corresponds to an automobile, the circumstance monitoring device of the vehicle is determined as the circumstance monitoring device of the automobile shown in Figs. 3-4.

Fig. 3 shows the overall construction of the automobile equipped with the circumstance monitoring device of the automobile. As shown in Fig. 3, the circumstance monitoring device of the automobile includes a camera, corresponding to the image capture means 1, an electronic control device ECD, a monitor, corresponding to display means 6, a shift lever switch 8, a steering angle sensor 9, and a plurality of wheel speed sensors 10. The electronic control device ECD may be accommodated in a steel case and comprises a Central Processing Unit CPU, and further includes the vehicle information detection means 2, the three-dimensional environment information constructing means 3, the storing means 4, the displaying image creation means 5, and the displaying means (shown in Figure 4, referenced by numeral 11). In case the displaying image is automatically determined, for instance by software, the determination means is also included in the electronic control device.

Fig. 4 is a schematic diagram showing in more detail the circumstance monitoring device of the vehicle containing the electronic control device ECD. The steering angle sensor 9, the shift lever switch 8, and the wheel speed sensors 10 are connected to the CPU provided in the electronic control device ECD. The camera 1 is connected to an image recognition module 12 and an image drawing module 11. The CPU, the image recognition module, the image drawing module, and the memory 4 are connected via signal wires.

With the embodiments of the present invention, the images of the environment surrounding the vehicle obtained by the camera and signals such as from the wheel speed sensors 10 are supplied to the CPU for calculation. Based on the calculated result, the image is drawn for display on the monitor.

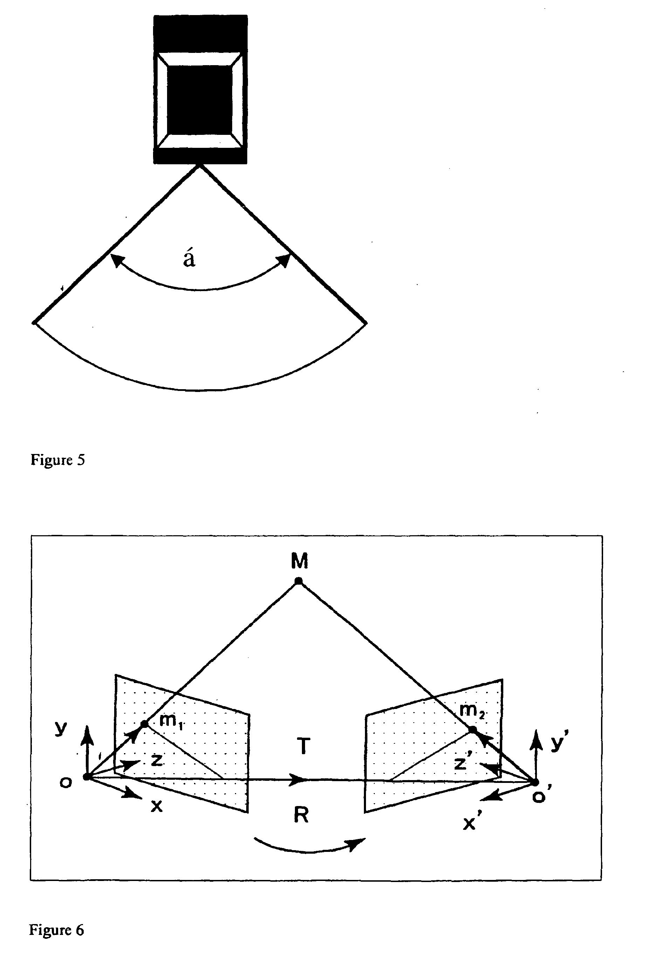

The image shot by the camera serving as the image capture device 1 at the vehicle surroundings is stored in a memory serving as the storing means 4. By moving the camera, it is possible to capture a range of images. Such a range shot by the camera corresponds to an image-captured region of a field angle $\alpha$ shown in Fig. 5.

With the three-dimensional environment information constructing means 3, when the vehicle moves from a first state to a second state, coordinates of a feature from an image shot by the camera 4 in the first state is detected and coordinates corresponding to the feature of the image shot in the second state is also detected. With the vehicle information detection means 2, positions and postures of the vehicle in the first and the second states are detected. In the foregoing manner, the position and the posture of the camera 1 in the first and the second states are detected. The three-dimensional information is constructed based on the position and the posture of the vehicle in the first and second state, the coordinates of the feature of the image shot in the first state, and the coordinates corresponding to the feature of the image shot in the second state to obtain three-dimensional coordinates of the feature.

The three-dimensional information is constructed based on the known principle of triangulation using images as disclosed for example in the document "Mathematics of Spatial Data", by KANATANI, Kenichi. (1995) Mathematics of Spatial Data Tokyo, pp. 161-162; Asakura Shoten.

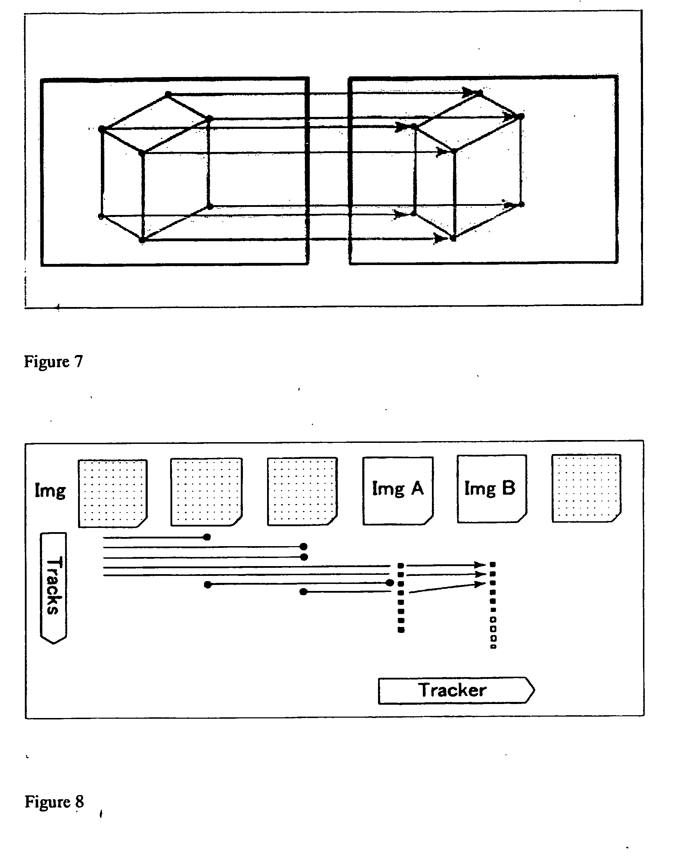

The construction of the three-dimensional information uses odometry and will now be explained while referring to Figs. 6-8. Figure 6 shows the geometrical relationship between twp camera positions. When observing an identical point M in the space from at least two camera positions, as shown as o and o' on the left and right side in Fig. 6, light rays in the air connecting an optical centre of the camera and points $m_1$, $m_2$ observed by the images of respective cameras can be determined. The intersecting point of each light ray shows the position M in space. In this case, it is required that the three-dimensional point M in an objective view is identified between successive images. For the three-dimensional reconstruction, one method consists in extracting the features of the object from the image and in tracking those features. An example is shown in Figure 7. Further, it is required that internal parameters (e.g., scale factor, optic axis position coordinates, distortion model) of the camera and external parameters (i.e., position and posture with respect to camera of the vehicle) are known, i.e. are calibrated in advance. The reconstruction of the three-dimension is performed on the premise of the foregoing requirements.

In order to restore the three-dimensional construction of the object using the triangulation principle by determining the correspondence of the features on successive images showing the movement of the objective view, the corresponding stereo may be applied for maintaining, for example, that both points $m_1$ and $m_2$ correspond to the identical object M (i.e., three dimensional point M). That is, respective image sequences shot at different positions and postures can restore the three dimensional construction by identifying the correspondence of the features of each image if the camera intrinsic parameters have been calibrated in advance and the camera extrinsic parameters have been calibrated. The camera extrinsic parameters can be calibrated, in a known manner, by using a dead-reckoning system. Specifically, odometry, a specific axis of research from dead reckoning, is used here because it allows calibrating external parameters of the embedded camera. Odometry effectively determines successive positions and orientations of the camera corresponding to image acquisitions. Once this external calibration is established, points of interest (located for example on obstacles) may be tracked in successive acquisitions and may be reconstructed in 3D to locate obstacles in the scene.

In this case, it is required to identify the identical point in the captured image sequence so that the identical point in the three-dimensional environment is reconstructed. That is, by identifying the correspondence of the identical points of the captured image sequence, the three-dimensional construction of the objective view can be restored.

Regarding the detection of the feature for the objective view, features which show the characteristics of the objective view are detected. The features in this case correspond to objects having appropriate characteristics which are traceable along with the sequence of the images. An automatic correlation shown as formula 1 discussed below can be applied for detecting the features. A matrix A functions to average derivatives of the image signal included in a window region W including a point p(x, y) in the image. Thus, an optimal feature can be obtained by using the matrix A. That is, the feature suitable for the tracking generally corresponds to the corners and the intersecting points of lines (e.g., block dots at corners of the left side of the drawing in Fig. 7) and the matrix A detects the feature such as the comers and the intersecting points.

According to formula 1 below, I(x, y) shows a function of the image, $I_x$ shows a gradient of the image along an x-axis, $I_y$ shows a gradient of the image along a y-axis, and $(x_k, y_k)$ shows an image point in the window W having (x, y) as a centre respectively.

[Formula 1]

$$A(x,y) = \begin{bmatrix} \sum_W (I_x(x_k, y_k))^2 & \sum_W (I_x(x_k, y_k) I_y(x_k, y_k)) \\ \sum_W (I_x(x_k, y_k) I_y(x_k, y_k)) & \sum_W (I_y(x_k, y_k))^2 \end{bmatrix}$$

Image sequence I (u, t) having coordinates of image point $u=[x, y]^T$ is considered for feature tracking. Presuming that the luminance value of the image does not change after elapsing a minute time when a sample cycle is sufficiently short, formula 2 is obtained.

[Formula 2]

$$I(\mathbf{u}, t) = I(\delta(\mathbf{u}), t + \tau)$$

With the formula 2, δ(u) shows a motion field (i.e., projection of three-dimensional motion vector to the image). Because the sample cycle is sufficiently short, as shown in a formula 3, the motion can be approximated using only a translation element out of the motion elements including a rotation element and the translation element. "d" in the formula 3 shows a displacement vector.

[Formula 3]

$$\delta(u) = u + d$$

In order to calculate the corresponding displacement vector d relative to each selected feature and each tracked pair of points in the image sequence, a tracker is applied. In practice, because the motion model of the image cannot be recovered perfectly because of the influence of the noise, the formula 2 does not function sufficiently. Accordingly, as shown in formula 4, the displacement vector d may be calculated by a sum of square difference. The displacement vector d, which minimizes a residual of the formula 4, is obtained by tracking the feature in the direction of the displacement vector d as shown in Fig. 7. "W" of the formula 4 shows a window for extracting the feature moving from a point u. Provided that the feature is positioned at coordinates u in an image, the position of the feature is detected presuming that the luminance value of the image after elapsing a short space of time does not vary close to the coordinates u.

[Formula 4]

$$\varepsilon = \sum_W [I(\mathbf{u} + \mathbf{d}, t + \tau) - I(\mathbf{u}, t)]^2$$

Fig. 8 shows an example of the tracking. A track is a set of points showing an identical object among the image sequences. Image points of each track correspond to a projected image of respective three-dimensional points. Although tracks of an image sequence should not be lost, the tracking has to be stopped when the tracking points cannot be detected because the points to be tracked are out of the image or the points to be tracked are hidden, or because of noise. In this case, starting from a set of the features detected in a first image, the features of the previous image, i.e., Img A in Fig. 8, is tracked onto the next image, i.e., Img B in Fig. 8. In case a part of the tracking among the previous image (i.e., Img A) is stopped, new features are searched in the next image (i.e., Img B). The new features become starting points for the tracking thereafter.

Regarding the reconstruction of the three-dimensional feature associated to a track, the problem boils down to reconstruct the point $M = (X\ Y\ Z\ 1)^t$ subject to $m_i \approx P_i M$, i.e. $m_i$ and $P_i M$ are collinear. This equation means that they are equal up to a scale. $P_i$ represents a projection matrix associated with each acquired image. Note that the distortion has been classically removed in a foregoing step in order to deal only with linear components of the projection.

Now the reconstruction is done in two steps. First, an initialisation is needed for the parameters $M$. Second, the reprojection residues (i.e. the distance in the image plane between the reprojected point and its location proposed by the tracking process) are minimized to refine the coordinate of the 3D point $M$.

For the initialisation each equation $m_i \approx P_i M$ is rewritten. As those two vectors are collinear (i.e. points are similar) the following equation is obtained:

$$\mathbf{m}_i \times \mathbf{P_i M} = \mathbf{O}_3.$$

In this equation, x stands for the cross product, for instance for any two 3 components vector a, b:

$$\mathbf{a} \times \mathbf{b} = \begin{pmatrix} a_x \\ a_y \\ a_z \end{pmatrix} \times \mathbf{b} = \begin{pmatrix} 0 & -a_z & a_y \\ a_z & 0 & -a_x \\ -a_y & a_x & 0 \end{pmatrix} \mathbf{b}$$

As $\mathbf{m}_i$ and $\mathbf{P}_i$ are known, it is possible to merge them together so as to obtain the system

$$\mathbf{B}_i \mathbf{M} = \mathbf{O}_3$$

with $\mathbf{B}_i$ a 3x4 matrix and $\mathbf{M}$ the unknown 3-components vector that is to be obtained.

$$\mathbf{B}_i = \mathbf{m}_i \times \mathbf{P_i} = \begin{pmatrix} u_i \\ v_i \\ 1 \end{pmatrix} \times \mathbf{P_i}$$

$$\mathbf{B}_i = \begin{pmatrix} 0 & -1 & v_i \\ 1 & 0 & -u_i \\ -v_i & u_i & 0 \end{pmatrix} \begin{pmatrix} p_0 & p_1 & p_2 & p_3 \\ p_4 & p_5 & p_6 & p_7 \\ p_8 & p_9 & p_{10} & p_{11} \end{pmatrix}$$

$$\mathbf{B}_i = \begin{pmatrix} -p_4 + v_i p_8 & -p_5 + v_i p_9 & -p_6 + v_i p_{10} & -p_7 + v_i p_{11} \\ p_0 - u_i p_8 & p_1 - u_i p_9 & p_2 - u_i p_{10} & p_3 - u_i p_{11} \\ -v_i p_0 + u_i p_4 & -v_i p_1 + u_i p_5 & -v_i p_2 + u_i p_6 & -v_i p_3 + u_i p_7 \end{pmatrix}$$

Classically, $\mathbf{P_i}$ is the projection matrix, i.e. a 3x4 matrix, $\mathbf{P_i} = \mathbf{A_i}[\mathbf{R_i t_i}]$ with $\mathbf{A_i}$ a 3x3 matrix holding the linear internal parameter of the camera, $\mathbf{R_i}$ a 3x3 matrix holding the rotational component of the external parameter and $\mathbf{t_i}$ a 3-components vector holding the position or the translation component of the external parameter of the camera. In this estimation, M is directly the vector of the parameter to be estimated.

Thus each point $m_i$ (2D positions of a track feature) provides 3 linear equations in $M$ defined in $\mathbf{B}_i$. For the full problem, using $n$ points $m_i$, the following system can be solved:

$$\mathbf{BM} = \begin{pmatrix} \mathbf{B_1} \\ \mathbf{B_2} \\ \mathbf{M} \\ \mathbf{B_n} \end{pmatrix} \mathbf{M} = \mathbf{O}_{3n}$$

Finally a system of 3 unknowns is obtained of the form $\mathbf{B}_{4x3n}\mathbf{M}_{1x4}=\mathbf{0}_{3n}$ which is solved for **M**. The solution of this problem is classically the eigenvector of **B** that corresponds to the smallest eigenvalue of **B**. The problem is the same than computing the Singular Value Decomposition (SVD) of the Matrix **B**.

It should be noted that it is not necessary to use all the images. In fact, at least two images are theoretically necessary. Thus, in order to improve efficiency, it is better to use just a few, at most $n = 10$, uniformly distributed along the sequence.

For the minimization, in a classic manner, it is possible to minimize the sum of residuals:

$$\varepsilon = \sum_i (m_i - \underline{m}_i)^2$$

This minimization is performed using a Levenberg Marquardt algorithm. It only needs the computation of $m_i - \underline{m}_i$.

Such computation is done in the following way:

$m_i = (u\ v\ 1)^t$ represents the position of the tracked feature. This position is known. The value $\underline{m}_i = (\underline{u}\ \underline{v}\ 1)^t$ needs to be computed from the projection of a point $M$ (the current value of the parameters).

By projecting the 3D point $M$ into the image, the value of the point is obtained:

$$\underline{m}_i = \frac{P_i M}{p_{3i}^t M} \ \text{ with } P_i = \begin{bmatrix} p_{1i}^t \\ p_{2i}^t \\ p_{3i}^t \end{bmatrix}.$$

The vector is divided by its last coordinate in order to have the last coordinate equal to 1. This is a necessary normalization to find the right coordinates. Doing so, the residual $m_i - \underline{m}_i$ can be computed.

As shown in Fig. 1, the vehicle information detection means for detecting the moving state of the vehicle includes a dead-reckoning system (represented by the dotted line in Fig.4) for detecting and tracking the position of the operator's own vehicle. To achieve the above-mentioned aim, the dead-reckoning system includes at least one sensor for detecting the vehicle movement such as the driving speed of the vehicle, the steering condition, and the turning condition, a CPU and memory. As presented in Fig. 4, the CPU and memory can also be used for other tasks and be part of the global system. According to the embodiments of the present invention, the wheel speed sensors achieve the function of the dead-reckoning system. Indeed, by using odometry, the vehicle position can be determined from wheels displacements. Although odometry is known to be subject to several types of errors, it can be used here because a positioning system is needed that is able to provide the vehicle position relative to a parking space and related obstacles. The relative displacement is sufficiently effective to determine external camera calibration under the assumptions that the ground is plane, the height, tilt and roll of the camera are known and constant. In an example, the position estimation may be based on measured signals from both rear left and rear right using the sensors from an antilock breaking system (ABS). Advantageously, the reverse signal may also be used to determine the running direction of the vehicle.

The transaction is performed based on the position and the posture of the vehicle under the first state and the second state determined in the foregoing manner and corresponding points between the images identified by extracting and tracking the features of the images captured by the camera in the respective first and second states. Then, the object existing in the image-capturing region is determined to estimate the three-dimensional coordinates of the image capturing region.

The method for creating the information of the object from the detected features will be explained as follows.

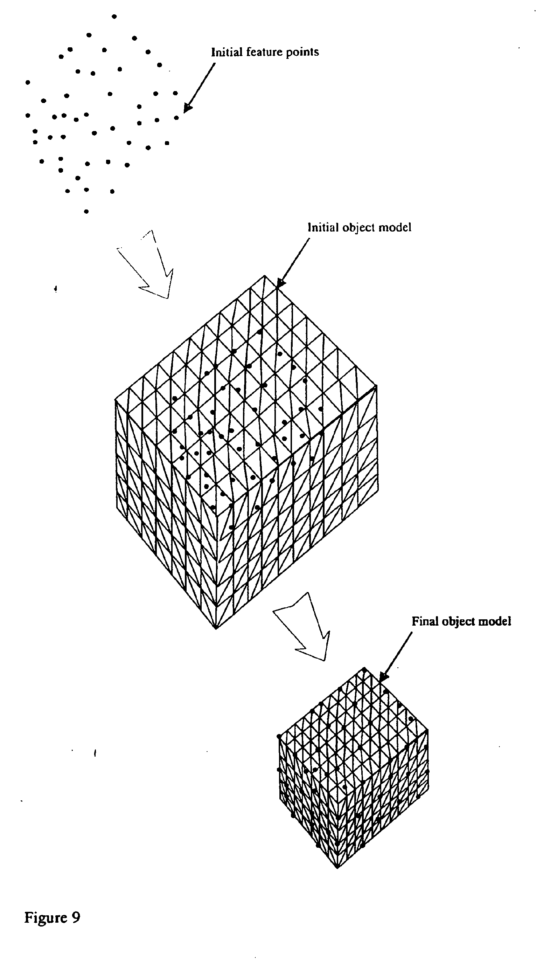

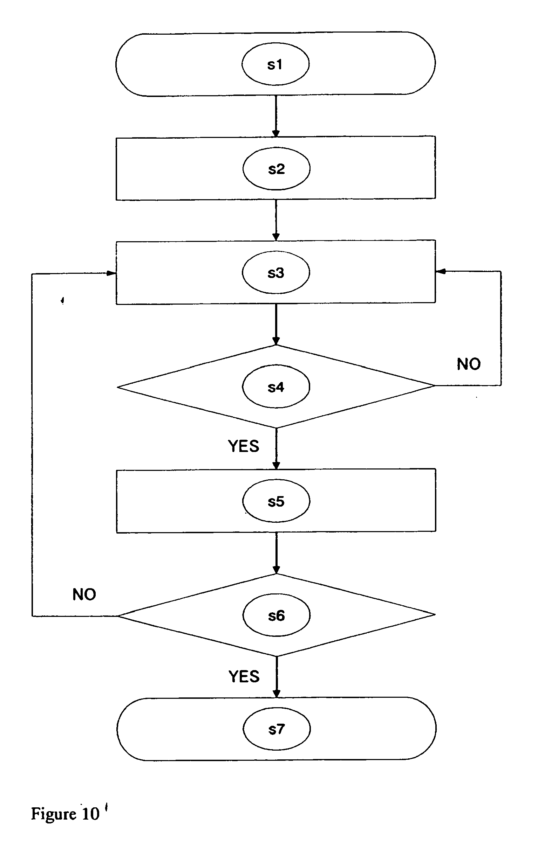

The configuration of the object can be reproduced using an iterative method to deform an initial mesh to fit the cloud of detected features and then either to reconstitute the object surface from images captured by the camera or to fit the resulting mesh to a predetermined object model. The model reproduction method is schematically represented in Fig. 9, where an initial mesh larger than the cloud of feature points is refined and modified to fit the cloud of feature points. The resulting model is a 3D mesh reproducing the object. Fig. 10 shows a flowchart explaining how this may be carried out. Thus, a first step s1 starts the object shape reproduction. In the next step s2, the initialisation of the process is performed by taking as input, both the cloud of detected features that should represent the object and a predefined meshed model of objects having vertices tagged as not done. This latter can be a generic model enclosing all the detected features that can be adapted to a variety of objects or a more specific model such as a vehicle in the case some object recognition was preliminarily done. Then in step s3, the model is deformed. The deformation can be realized by moving, a vertex (tagged as not done) of the model by a constant step, along the direction of the local normal, which is oriented inward, i.e. toward the centre of the cloud of feature points. In step s4 it is determined if there are feature points located outside the object model. If so, in step s5, the model is re-adapted i.e. the vertex is set back to its last position and the corresponding vertex is tagged as done. If not, the deformation is applied in an iterative way by carrying again step s3. In that case the vertex to be modified can either be the same vertex or any of the remaining vertices tagged as not done. Preferably the vertex chosen should be next to the last moved one in order to keep the global properties of the object shape. Then in step s6, it is determined if all the vertices of the model are tagged as done or not. If not, step s3 is carried again. If yes, since the shape reproduction does not need to be continued and it is completed in step s7.

A road surface, vertical panels and any obstacles located in the 3D environment can be considered as the objective element used to represent the 3D environment.

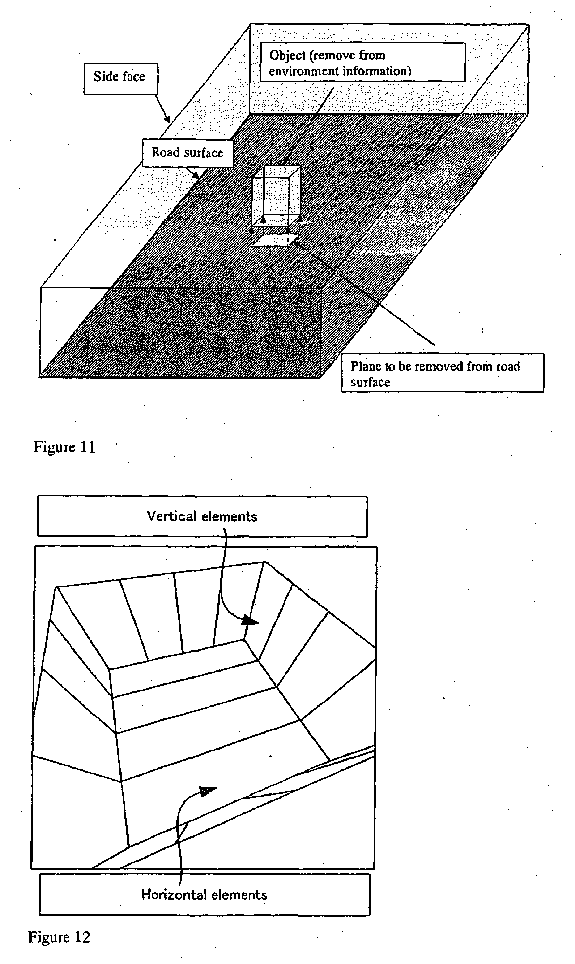

For example, in case the road surface is applied as the objective element, because the road surface is most likely applied with other objects, the road surface can be extracted by removing the object from level zero plane surface portion as shown in Fig. 11 to define the plane surface portion as the road surface. Likewise, as shown in Fig. 11, the background can be defined by an imaginarily created wall surface, indicated as a virtual side face.

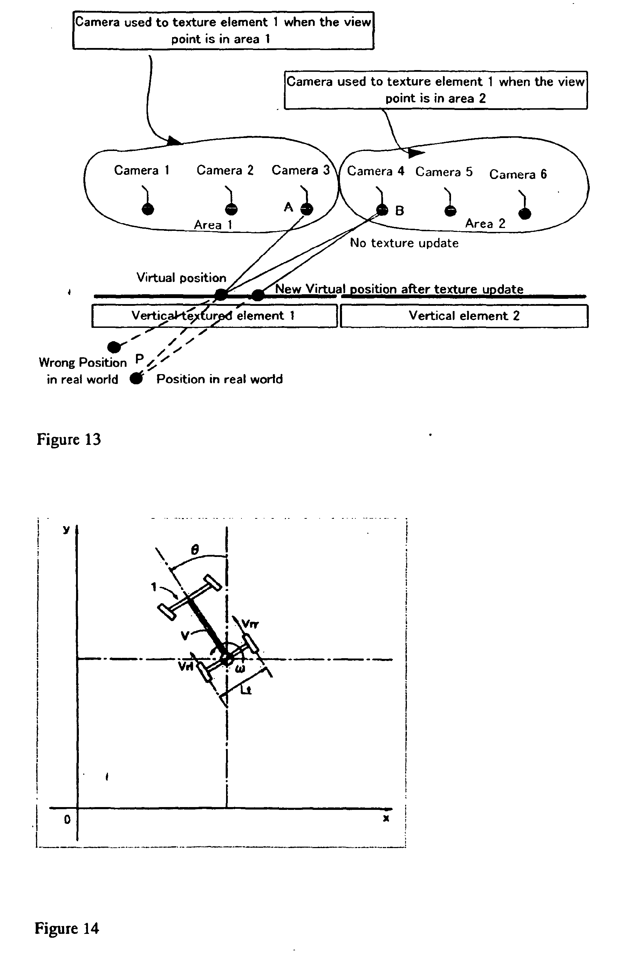

In order to augment the realism of the reconstructed environment, it is necessary to add boundaries within our virtual environment. Those boundaries allow a full immersive feeling and improve realism. The boundaries are made of several flat panels, or horizontal elements, that represent the road model, together with some vertical panels that represent the scenery model. Figure 12 shows these elements. As a skilled person may understand, the use of horizontal and vertical planes is only an example. Any other orientation of the panel elements representing the road surface or the scenery may be used in a similar manner. The elements shown in figure 12 simply allow for an easy understanding of this principle. Concerning the texture, it is extracted from the image thereby compensating both for the luminosity and the geometry aberration. For the horizontal elements it is well known. For the vertical elements, the point here is that the texture is mapped onto non-physical elements of the scene. Theoretically speaking it is impossible to recover the texture of these non-existing elements in such conditions. The point here is that by choosing carefully the images being used to texture those elements, this allows for a better realism. In fact, choosing an image that covers an as wide as possible part of the element allows to reduce the induced artefacts. Further enforcing the blending of several image contributions allows reducing the induced artefacts. This first approach allows for accessing a full realism, as long as the virtual camera is not too far from the set of cameras that have acquired the image sequence. In order to further improve the quality of the realism, and to allow for more virtual camera positions, it is possible in a second approach, to recompute the texture of the elements by selecting a different subset of images. This selection is based on the subset of potential positions of the virtual camera, i.e. a neighbourhood of the virtual camera. This is shown in area 1 or 2 in Figure 13.

At least, a smooth transition based on a blending can be used when the virtual camera moves between different subset of positions. This algorithm is illustrated in Fig. 13. This does not concern the horizontal elements but the vertical ones. Indeed, the vertical elements are usually mapped onto physical planes (walls, buildings) for games, virtual visit applications are in our application mapped on non-physical planes. Using this method provides a virtual view of the environment surrounding the vehicle even if there are no actual vertical physical planes surrounding the vehicle. The virtual view given by the system is not restricted to a view located near the trajectory (path) of the cameras that took images used for generating the panorama (vertical planes).

According to the embodiments of the present invention, the dead-reckoning system is constructed for detecting the vehicle state, that is the position and the direction (i.e., angle about the vertical axis) of the vehicle, based on the wheel speed signals detected by the wheel speed sensors.

The method for detecting the vehicle state will be explained. Figure 14 shows a vehicle model according to the embodiment of the present invention. The position and the direction of the vehicle may be defined with three variables $(x, y, \theta)$. When the vehicle speed is defined as a vehicle speed V and the angular velocity is defined as an angular velocity $\omega$, the following formula is established between the vehicle state, the vehicle speed, and the angular velocity. That is:

$$dx/dt = V \cdot \cos\theta$$

$$dy/dt = V \cdot \sin\theta$$

$$d\theta/dt = \omega$$

Although the vehicle speed V and the angular velocity $\omega$ cannot be directly measured, the vehicle speed V and the angular velocity $\omega$ can be determined using the wheel speed of the rear wheels on the right and left detected by the wheel speed sensor as follows. That is:

$$V = (Vrr + Vrl) / 2$$

$$\omega = (Vrr - Vrl) / Lt$$

 wherein Vrr stands for the wheel speed of the rear right wheel and Vrl stands for the wheel speed of the rear left wheel, and Lt stands for a thread length of the vehicle.

According to the foregoing formulas, the vehicle state (x, y, $\theta$) at a time t can be shown in the following manner when an initial value $(x_0, y_0, \theta_0)$ when t equals to zero is determined.

$$x = x_0 + \int (dx/dt)dt$$

wherein $\int$ is varied from t equals to zero to t equals to t (i.e., t =0 $\rightarrow$ t=t)

$$y = y_0 + \int (dy/dt)dt$$

wherein $\int$ is varied from t equals to zero to t equals to t (i.e., t =0 $\rightarrow$ t=t)

$$\theta = \theta_0 + \int (d\theta/dt)dt$$

wherein $\int$ is varied from t equals to zero to t equals to t (i.e., t =0 $\rightarrow$ t=t)
That is, the vehicle state (x, y, $\theta$) will be determined as shown in a formula 8.

$$x = x_0 + \int_{t=0}^{t} \dot{x}\,dt$$

$$y = y_0 + \int_{t=0}^{t} \dot{y}\,dt$$

$$\theta = \theta_0 + \int_{t=0}^{t} \dot{\theta}\,dt$$

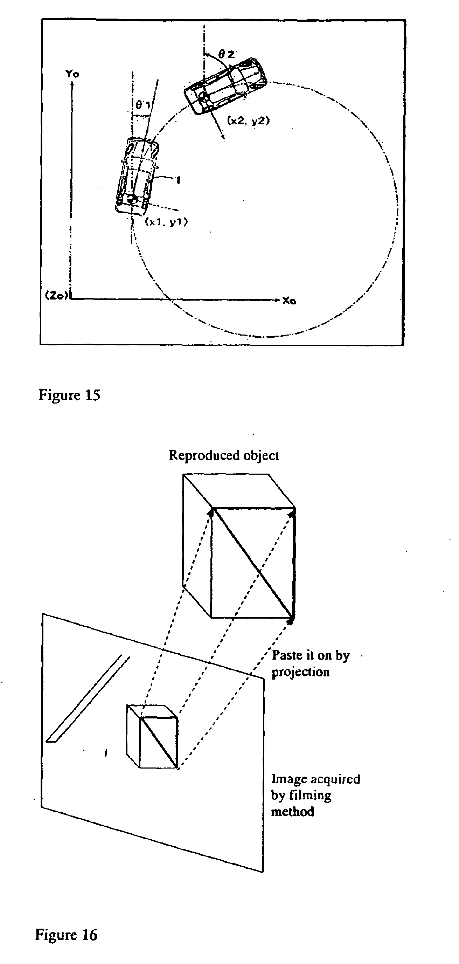

Figure 15 shows an example of a method for detecting and tracking the coordinates of the position and the direction after the movement having the coordinates and the direction at the initial position of the vehicle movement according to the predetermined three dimensional coordinates as a reference. That is, Figure 15 shows the condition of the vehicle performing a turning movement on $X_0$-$Y_0$ plane (i.e., $Z_0$=0) according to the three-dimensional coordinates $(X_0, Y_0, Z_0)$. The positional relationship from a first vehicle condition determined by a first position (i.e., coordinates $(x_1, y_1)$) and a first direction (i.e., angle $\theta_1$) to a second vehicle condition determined by a second position (i.e., coordinates $(x_2, y_2)$) and a second direction (i.e., angle $\theta_2$) can thus be determined. Although the vehicle position (i.e., coordinates) and the direction (i.e., angle) are detected based on the detected wheel speed by the wheel speed sensors for the rear wheels on the right and left with the embodiments of the present invention, the vehicle position and the direction may be determined using a steering angle sensor, a yaw rate sensor (not shown), a distance sensor (not shown), or combinations of those. Although Figure 15 shows the plain orbital movement, the vehicle movement can be tracked based on the detected vehicle coordinates and the direction as foregoing manner relative to the locus that is the combination of plural circles and lines.

On the other hand, the three dimensional environment estimated by a three dimensional environment constructing means shown in Figs. 1-2 is stored in a memory as the three dimensional space having the three dimensional coordinates (X, Y, Z) as a reference. The three-dimensional space includes other vehicles which are not the operator's own vehicle, obstacles, and buildings shot by the camera. The relationship of the position and the posture relative to the surrounding environment of the vehicle obtained based on the vehicle information detection means is corrected relative to the three dimensional space. That is, the vehicle position (i.e., coordinates) and the posture (i.e., directional angle) of the vehicle in the three dimensional space is determined.

A displaying image is determined to be an image, which includes a part or the whole of information of three-dimensional environment around the vehicle, which is performed using the predetermined processing to make outward appearance of structures, concerning information about structures to express three-dimensional environment.

The above predetermined processing is determined to create information of the three-dimensional environment around a vehicle by superimposing textures acquired by image capture means to fit information of structures which express three-dimensional environment. With this method, a plurality of plane surfaces having the features constructing the object as vertices is created on a surface of the reproduced object represented as three dimensional structure as shown in Figure 16. For example, a plurality of triangles is formed with vertices serving as the features for constructing the object for reproducing the configuration of the object. The region of the image corresponding to the created plane surface having the features as the vertices are extracted from the image obtained by the image capture means. Thus, the extraction of the region of the image can be performed by the corresponding relationships between the position and the configuration of the object and each plane surface of the image. The extracted images are projected on the surface of the object including the created vehicle surroundings information. Thus, because the displaying image includes the region of the image obtained by the image capture means, the displaying image becomes more realistic.

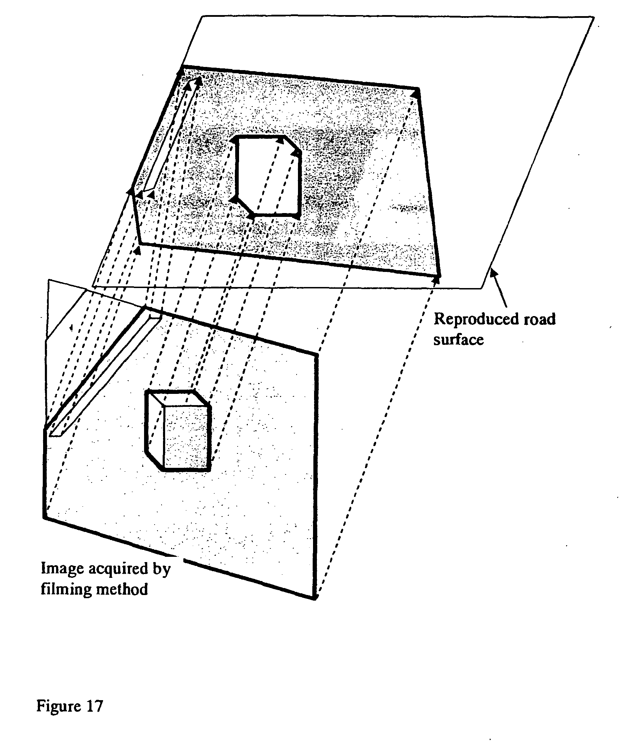

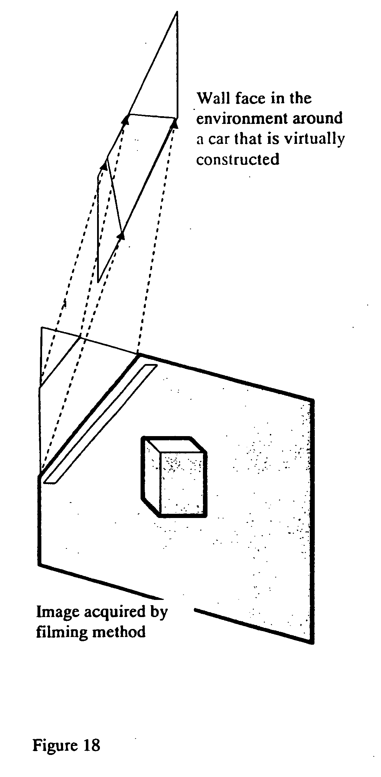

Although the object has been determined as the object to be superimposed as the image for the reproduction, the road surface and the wall surface constructing the environment may be determined as the object to be superimposed as the image for the reproduction. In case the road surface is determined as the object to be superimposed as the image for the reproduction, as shown in Fig. 17, the image corresponding to the road surface model is superimposed. In case the wall surface constructing the environment is determined as the object to be superimposed as the image for the reproduction, as shown in Fig. 18, the image corresponding to the wall surface constructing the environment may be superimposed.

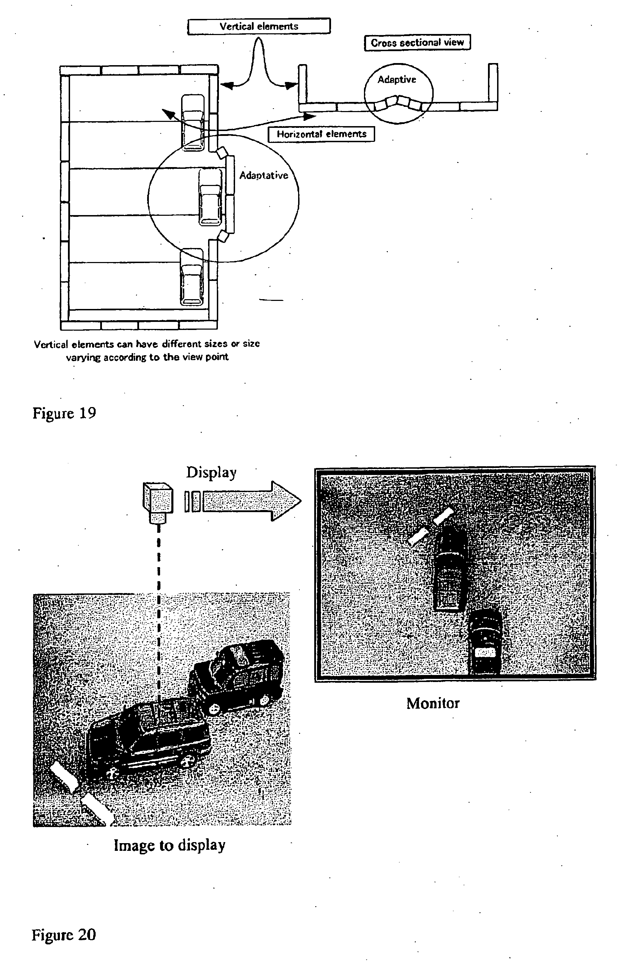

The boundaries of the virtual world are set to lay on a rectangular base at initialization stage. This might remain the same during the full process, but if required by the displacement of the car, it may occur that we have to readapt the layout of our boundaries. In other words the external shape of our world can be adapted in real time for realism purposes. This is used for instance to enclose all the obstacles that are considered dangerous for the driver. Figure 19 shows an example of adaptive panorama. Adapting the environment this way enables once again a more realistic representation of the world compared to fixed world boundaries. The adaptation of the three-dimensional environment can be realized in the three dimensions of the space. This also means that the road panels could be adapted to the slope or the shape of the road. An example is given in the cross sectional view of Fig 19 for the case of a bump. (which is itself not shown in Fig. 19).

The space for creating the displaying image may be created by applying a predetermined colour to the surface of the model of the objective element for expressing the space for showing the constructed three-dimensional environment information. This enables to create the displaying image by simpler method.

With the method for creating the displaying image from the created space, the displaying image may be created by creating a virtual camera in the space and by displaying the image of the virtual space captured by the virtual camera on a monitor as the displaying image.

The virtual camera may be appropriately positioned for displaying the images necessary for the operator. For example, as shown in Fig. 20, the displaying image displays the image for looking down upon the entire vehicle. In this case, the virtual camera is, for example, directed from a position above the centre of gravity of the vehicle by a predetermined height in a vertically downward direction. Thus, the image for viewing the vehicle and the region surrounding the vehicle at one time can be displayed.

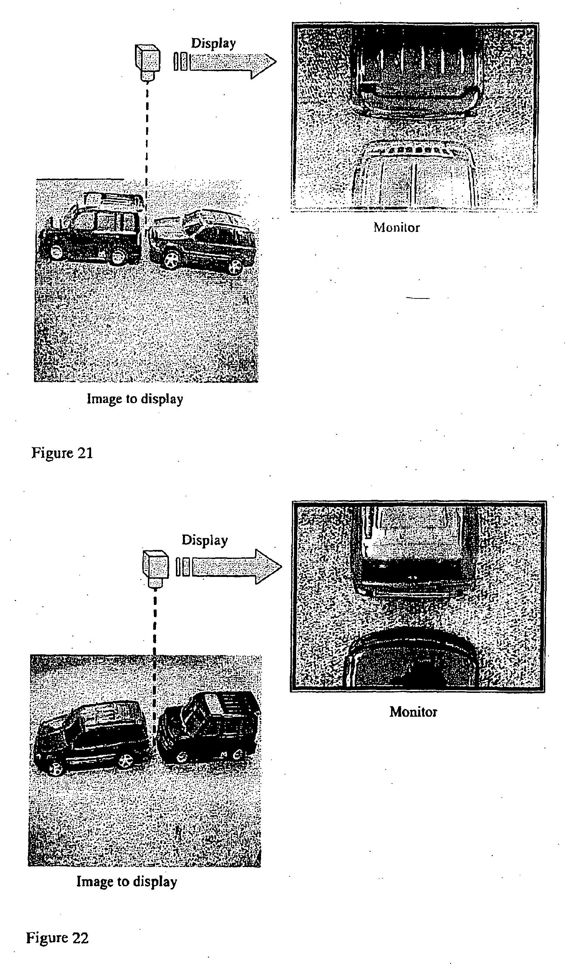

Otherwise, the virtual camera may be positioned so that the displaying image displays a positional relationship between the objective element in front of the vehicle and a front portion of the vehicle as shown in Fig. 21. In this case, the virtual camera, for example, may be directed from a point having a predetermined distance in an upward direction from the road surface in the downward direction at a predetermined position between the front portion of the vehicle and the objective element. Thus the image for viewing the front portion of the vehicle and the objective element at one time can be displayed.

Otherwise, the virtual camera may be positioned so that the displaying image displays a positional relationship between an objective element at the rear of the vehicle and a rear surface of the vehicle as shown in Fig. 22. In this case, the virtual camera may be directed from a point keeping a predetermined distance in the upward direction from the road surface in the downward direction at a predetermined position between the objective element and the rear surface of the vehicle. Thus, the image for viewing the rear portion of the vehicle and the objective element at one time can be displayed.

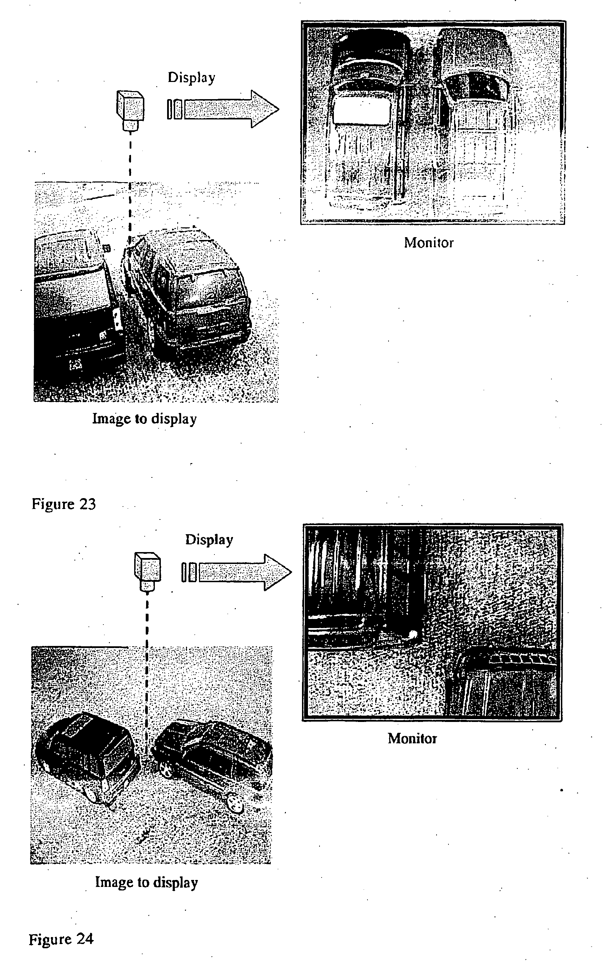

Otherwise, the virtual camera may be positioned so that the displaying image displays a positional relationship between an objective element at the side of the vehicle and a side surface of the vehicle as shown in Fig. 23. In this case, the virtual camera may be directed from a point keeping a predetermined distance in the upward direction from the road surface in the downward direction at a predetermined position between the objective element at the side of the vehicle and the side surface of the vehicle. Thus, the image for displaying the side of the vehicle and the objective element can be viewed at one time.

Otherwise, the virtual camera may be positioned so that the displaying image displays a positional relationship between a comer of the vehicle and an objective element positioned surrounding the comer as shown in Fig. 24. In this case, the virtual camera is directed from a point keeping a predetermined distance in the upward direction from the road surface in the downward direction at a predetermined position between the corner of the vehicle and the obj ective element. Thus, the comer of the vehicle and the objective element can be observed at the same time.

It is possible to display an image when the virtual camera is turned not only downward, but in another direction, for example an inclined direction.

By arranging for displaying one of those foregoing images and for switching the images with a predetermined method, effective images for each case can be displayed on the monitor. For example, a button illustrating a graphic of the vehicle may be provided on an instrument panel so that the operator can press a portion of the vehicle to choose, to then display the image of the pressed portion of the vehicle on the monitor. Thus, the operator can determine the displaying method of the image of the surroundings of the vehicle that is appropriate for the occasion.

Further, the displaying image for vehicle surroundings may be automatically determined, for examples, by the driving conditions, by the steering angle, by the information whether the vehicle is moving forward or backward, by the condition of the surroundings of the vehicle, and by the distribution of the objective element. Accordingly, the operator can obtain information that the operator cannot notice without the assistance of the images.

In order to automatically determine the displaying image, the distance between the vehicle and the objective element of the surroundings of the vehicle may be for example detected, then the portion having a short distance between the vehicle and the objective element is displayed, and the surroundings is displayed so that the surrounding can be viewed in case the objective element does not exist in the surroundings of the vehicle.

In addition, other displaying method such as that the display is not performed in case the objective element does not exist in the surroundings of the vehicle can be automatically adopted.

Further, by superimposing the graphic of the operator's own vehicle with the displaying image, the relationship between the own vehicle and the surroundings of the own vehicle can be shown in more detail.

The embodiments of the present invention are not limited to the foregoing examples and may be varied for example as follows.

Although one camera is boarded at the rear portion of the vehicle according to the foregoing embodiments, the camera may be boarded on the front portion or the side portion of the vehicle. Further, a plurality of cameras may be applied.

With the foregoing embodiments, the button illustrating the graphic of the vehicle is provided on the instrument panel so that the operator can press the portion of the vehicle to choose to display the image of the selected portion of the vehicle. On the contrary, the images may be selected by using voice recognition and the images may also be selected using a touch panel on the monitor.

With the foregoing embodiments, when determining the displaying image based on the conditions of the vehicle and the surroundings of the vehicle, the displaying image is determined by the conditions of the vehicle and the vehicle surroundings, for example, by the distance between the vehicle and the objective element of the surroundings of the vehicle. On the contrary, the displaying image may be determined when the operator shifts a gear into reverse, when the operator turns the turning indicator ON, when the operator activates the brake pedal, or when the operator operates the steering wheel.

With the foregoing embodiments, the model of the operator's own vehicle is superimposed on the displaying image. On the contrary, a configuration model of the own vehicle pasted with the original image of the own vehicle may be superimposed on the displaying image. Thus, the display gives the operator less sense of discomfort compared to the case the graphic of the own vehicle is superimposed on the displaying image.

The circumstance monitoring device of vehicle according to the embodiments of the present invention is applicable to vehicles including automobiles, mobile robots and transporters operated in plants.

According to the circumstance monitoring device of the vehicle of the present invention, the operator of the vehicle can observe the image for grasping the positional relationship between the vehicle and the objective element in the surroundings of the vehicle on the monitor. Thus, the operator can operate the vehicle referring to the image on the monitor in case the operator desires to operate the vehicle considering the existence of the objective element in the surroundings of the vehicle, for example, so that the vehicle does not contact the objective element.

According to the circumstance monitoring device of the vehicle of the present invention, the view of the vehicle at the predetermined position is ensured irrespective of the number and the position of the image capture device such as the camera to properly display the image. Particularly, by using the vehicle information detection means, the environment information can be easily detected by one image capture means. Thus, the manufacturing cost of the device can be reduced. In addition, because the speed detector serves as the moving condition detection means, the manufacturing cost of the device can be reduced.

The circumstance monitoring device of the vehicle of the present invention displays image which includes a part or the whole of information of three-dimensional environment around the vehicle. Therefore, this device can display the image around the vehicle which is turned to arbitral direction from arbitral viewpoint.

Further, by constructing the device so that the operator of the vehicle determines the displaying image, the images can be switched to the desired image easily in accordance with the direction of the operator. Further, by constructing the device so that the displaying image is automatically determined, the images that the operator cannot notice without the assistance of the image can be obtained in accordance with the condition of the driving and the condition of the surroundings of the vehicle.

Further, by pasting the information of the vehicle to the displaying image, the positional relationship between the vehicle and the surroundings of the vehicle can be further clearly determined.

Further, by superimposing texture on non-physical vertical planes and by adapting the geometry of the three dimensional environment according to the environment, the relationship between the vehicle and the surroundings of the vehicle can be further clearly determined.

**Claims**

1. A circumstance monitoring device of a vehicle comprising:

   an image capture means (1) provided on the vehicle for shooting an image of scenery around the vehicle and for outputting image information;
   a vehicle information detection means (2) comprising a dead-reckoning system for consecutively detecting a moving state of the vehicle;
   a three-dimensional environment information constructing means (3) for constructing three-dimensional environment information of the surroundings of the vehicle based on the image shot by the image capture means (1);

a storing means (4) for storing at least one of the image information and the three-dimensional environment information;

a displaying image creation means (5) for creating a displaying image by mapping a texture extracted from the image information onto planes defined by imaginarily created surface around said vehicle based on the three-dimensional environment information and the detected results of the vehicle information detection means; and

a display means (6) for displaying the displaying image wherein said displaying image creation means (5) is arranged to change the mapping of the texture each time the view point locus in the 3D environment is moved.

2. A circumstance monitoring device of a vehicle according to Claim 1,

wherein the vehicle information detection means (2) detects a moving state of the vehicle at least between two positions of the vehicle;

wherein the image capture means (1) comprises at least one image capture device fixed to a predetermined position of the vehicle; and

wherein the three-dimensional environment information constructing means (3) constructs the three-dimensional environment information of the surroundings of the vehicle based on the image shot at said at least two different positions of the vehicle by the image capture device (1).

3. A circumstance monitoring device of a vehicle according to Claim 2, wherein the vehicle information detection means (2) comprises a speed detector (10) for detecting a speed of the vehicle and measures a moving distance of the vehicle at least between said two positions based on a detected result of the speed detector.

4. A circumstance monitoring device of a vehicle according to anyone of Claims 1 to 3, further comprising:

a determination means (7) for determining a predetermined displaying image.

5. A circumstance monitoring device of a vehicle according to Claim 4, wherein the determination means (7) determines the predetermined displaying image by an operation of an operator of the vehicle.

6. A circumstance monitoring device of a vehicle according to Claim 4, wherein the determination means (7) automatically determines the displaying image based on a predetermined condition concerning the vehicle and the surroundings of the vehicle.

7. A circumstance monitoring device of a vehicle according to Claim 6, wherein the displaying image is automatically determined based on a positional relationship between the vehicle and an objective element of the environment surrounding the vehicle.

8. A circumstance monitoring device of a vehicle according to anyone of Claims 1 to 7, wherein at least one of the displaying images corresponds to an image for looking down upon the environment surrounding the vehicle.

9. A circumstance monitoring device of a vehicle according to anyone of Claims 1 to 7, wherein at least one of the displaying images corresponds to an image for displaying a positional relationship between an objective element positioned in front of the vehicle and a front portion of the vehicle.

10. A circumstance monitoring device of a vehicle according to anyone of Claims 1 to 7, wherein at least one of the displaying images corresponds to an image for displaying a positional relationship between an objective element positioned at rear of the vehicle and a rear portion of the vehicle.

11. A circumstance monitoring device of a vehicle according to anyone of Claims 1 to 7, wherein at least one of the displaying images corresponds to an image for displaying a positional relationship between an objective element positioned on a side of the vehicle and a side portion of the vehicle.

12. A circumstance monitoring device of a vehicle according to anyone of Claims 1 to 7, wherein at least one of the displaying images corresponds to an image for displaying a positional relationship between an objective element positioned surrounding a corner of the vehicle and the corner of the vehicle.

13. A circumstance monitoring device of a vehicle according to anyone of Claims 1 to 12, wherein said displaying image creation means (5) is arranged to create a displaying image corresponding to an image which includes a part or the whole of information of the three-dimensional environment surrounding the vehicle by using a predetermined processing of outward appearances of structures concerning information about structures to express the three-dimensional environment.

14. A circumstance monitoring device of a vehicle according to anyone of Claims 1 to 13, wherein said displaying image creation means (5) is arranged to use information about structures by mapping the texture onto planes not necessarily having a physical meaning when mapping of the texture acquired by said image capture means (1).

15. A circumstance monitoring device of a vehicle according to Claim 14, wherein said planes are horizontal planes and vertical planes.

16. A circumstance monitoring device of a vehicle according to anyone of Claims 1 to 13, wherein said displaying image creation means (5) continuously adapts the geometry of the three-dimensional environment as a function of the three-dimensional environment itself.

17. A circumstance monitoring device of a vehicle according to anyone of Claims 1 to 16, wherein said displaying image creation means (5) superimposes an image of the vehicle with the displaying image.

18. A circumstance monitoring device of a vehicle according to anyone of Claims 1 to 17, wherein said displaying image is a panorama image.

**Patentansprüche**

1. Umgebungsüberwachungsvorrichtung eines Fahrzeugs, enthaltend:

ein Bilderfassungsmittel (1), das an dem Fahrzeug bereitgestellt ist zum Aufnehmen eines Bildes einer Umgebung des Fahrzeugs, und zum Ausgeben von Bildinformation;
ein Fahrzeuginformationsdetektionsmittel (2), das ein Koppelnavigationssystem enthält zum fortlaufenden Detektieren eines Bewegungszustands des Fahrzeugs;
ein 3D-Umgebungsinformationsbildungsmittel (3) zum Bilden einer dreidimensionalen Umgebungsinformation der Umgebung des Fahrzeugs basierend auf dem von dem Bilderfassungsmittel (1) aufgenommenen Bild;
ein Speichermittel (4) zum Speichern von mindestens einer von der Bildinformation und der dreidimensionalen Umgebungsinformation;
ein Anzeigebilderzeugungsmittel (5) zum Erzeugen eines Anzeigebilds durch Abbilden einer Textur, die aus der Bildinformation extrahiert wird, auf Ebenen, die durch imaginär erzeugte Oberflächen um das Fahrzeug herum definiert sind, basierend auf der dreidimensionalen Umgebungsinformation und den detektierten Ergebnissen des Fahrzeuginformationsdetektionsmittels; und
ein Anzeigemittel (6) zum Anzeigen des Anzeigebilds, wobei das Anzeigebilderzeugungsmittel (5) angeordnet ist zum Ändern der Abbildung der Textur, jedes Mal wenn der Ansichtspunktort in der 3D-Umgebung bewegt wird.

2. Umgebungsüberwachungsvorrichtung eines Fahrzeugs nach Anspruch 1, bei der
das Fahrzeuginformationsdetektionsmittel (2) einen Bewegungszustand des Fahrzeugs mindestens zwischen zwei Positionen des Fahrzeugs detektiert;
wobei das Bilderfassungsmittel (1) mindestens eine Bilderfassungsvorrichtung enthält, die an einer vorbestimmten Position des Fahrzeugs fixiert ist; und
wobei das dreidimensionale Umgebungsinformationsbildungsmittel (3) die dreidimensionale Umgebungsinformation der Umgebung des Fahrzeugs basierend auf dem Bild bildet, das durch die Bilderfassungsvorrichtung (1) an den mindestens zwei unterschiedlichen Positionen des Fahrzeugs aufgenommen wurde.

3. Umgebungsüberwachungsvorrichtung eines Fahrzeugs nach Anspruch 2, bei der das Fahrzeuginformationsdetektionsmittel (2) einen Geschwindigkeitsdetektor (10) zum Detektieren einer Geschwindigkeit des Fahrzeugs enthält, und eine Bewegungsstrecke des Fahrzeugs mindestens zwischen den zwei Positionen basierend auf einem detektierten Ergebnis des Geschwindigkeitsdetektors misst.

4. Umgebungsüberwachungsvorrichtung eines Fahrzeugs nach einem der Ansprüche 1 bis 3, ferner mit
einem Bestimmungsmittel (7) zum Bestimmen eines vorbestimmten Anzeigebilds.

**5.** Umgebungsüberwachungsvorrichtung eines Fahrzeugs nach Anspruch 4, bei der das Bestimmungsmittel (7) das vorbestimmte Anzeigebild durch eine Bedienung durch einen Benutzer des Fahrzeugs bestimmt.

**6.** Umgebungsüberwachungsvorrichtung eines Fahrzeugs nach Anspruch 4, bei der das Bestimmungsmittel (7) automatisch das Anzeigebild basierend auf einer vorbestimmten Bedingung bestimmt, die das Fahrzeug und die Umgebung des Fahrzeugs betrifft.

**7.** Umgebungsüberwachungsvorrichtung eines Fahrzeugs nach Anspruch 6, bei der das Anzeigebild automatisch basierend auf einer Positionsbeziehung zwischen dem Fahrzeug und einem Zielelement der Umgebung, die das Fahrzeug umgibt, bestimmt wird.

**8.** Umgebungsüberwachungsvorrichtung eines Fahrzeugs nach einem der Ansprüche 1 bis 7, bei der mindestens eines der Anzeigebilder einem Bild zum nach unten schauen auf die Umgebung, die das Fahrzeug umgibt, entspricht.

**9.** Umgebungsüberwachungsvorrichtung eines Fahrzeugs nach einem der Ansprüche 1 bis 7, bei der mindestens eines der Anzeigebilder einem Bild zum Anzeigen einer Positionsbeziehung zwischen einem Zielelement, das vor dem Fahrzeug positioniert ist, und einem Frontbereich des Fahrzeugs entspricht.

**10.** Umgebungsüberwachungsvorrichtung eines Fahrzeugs nach einem der Ansprüche 1 bis 7, bei der mindestens eines der Anzeigebilder einem Bild zum Anzeigen einer Positionsbeziehung zwischen einem Zielelement, das hinter dem Fahrzeug positioniert ist, und einem hinteren Bereich des Fahrzeugs entspricht.

**11.** Umgebungsüberwachungsvorrichtung eines Fahrzeugs nach einem der Ansprüche 1 bis 7, bei der mindestens eines der Anzeigebilder einem Bild zum Anzeigen einer Positionsbeziehung zwischen einem Zielelement, das auf einer Seite des Fahrzeugs positioniert ist, und einem Seitenbereich des Fahrzeugs entspricht.

**12.** Umgebungsüberwachungsvorrichtung eines Fahrzeugs nach einem der Ansprüche 1 bis 7, bei der mindestens eines der Anzeigebilder einem Bild zum Anzeigen einer Positionsbeziehung zwischen einem Zielelement, das um eine Ecke des Fahrzeugs herum positioniert ist, und der Ecke des Fahrzeugs entspricht.

**13.** Umgebungsüberwachungsvorrichtung eines Fahrzeugs nach einem der Ansprüche 1 bis 12, bei dem das Anzeigebilderzeugungsmittel (5) angeordnet ist zum Erzeugen eines Anzeigebilds entsprechend einem Bild, das einen Teil oder die gesamte Information der dreidimensionalen Umgebung, die das Fahrzeug umgibt, enthält, indem eine vorbestimmte Verarbeitung einer äußeren Erscheinung von Strukturen verwendet wird, die Information über Strukturen zum Ausdrücken der dreidimensionalen Strukturen betreffen.

**14.** Umgebungsüberwachungsvorrichtung eines Fahrzeugs nach einem der Ansprüche 1 bis 13, bei der das Anzeigebilderzeugungsmittel (5) zum Verwenden von Information über Strukturen angeordnet ist, indem die Textur auf Ebenen abgebildet wird, die nicht notwendigerweise eine physikalische Bedeutung haben, wenn die Textur, die durch das Bilderfassungsmittel (1) erfasst wird, abgebildet wird.

**15.** Umgebungsüberwachungsvorrichtung eines Fahrzeugs nach Anspruch 14, bei der die Ebenen horizontale Ebenen und vertikale Ebenen sind.

**16.** Umgebungsüberwachungsvorrichtung eines Fahrzeugs nach einem der Ansprüche 1 bis 13, bei der das Anzeigebilderzeugungsmittel (5) fortlaufend die Geometrie der dreidimensionalen Umgebung als Funktion der dreidimensionalen Umgebung selbst anpasst.

**17.** Umgebungsüberwachungsvorrichtung eines Fahrzeugs nach einem der Ansprüche 1 bis 16, bei der das Anzeigebilderzeugungsmittel (5) das Anzeigebild mit einem Bild des Fahrzeugs überlagert.

**18.** Umgebungsüberwachungsvorrichtung eines Fahrzeugs nach einem der Ansprüche 1 bis 17, bei der das Anzeigebild ein Panoramabild ist.

**Revendications**

**1.** Dispositif de surveillance de circonstances pour un véhicule, comprenant :

un moyen de capture d'image (1) aménagé sur le véhicule pour prendre une image de scène autour du véhicule et délivrer des informations d'image ;

un moyen de détection d'informations de véhicule (2) comprenant un système de navigation à l'estime pour détecter consécutivement un état mobile du véhicule ;

un moyen (3) de construction d'informations d'environnement en trois dimensions pour construire des informations d'environnement en trois dimensions sur l'environnement du véhicule en se basant sur l'image prise par le moyen de capture d'image (1) ;

un moyen de stockage (4) pour stocker au moins l'une des informations d'image et des informations d'environnement en trois dimensions ;

un moyen (5) de création d'image d'affichage pour créer une image d'affichage en cartographiant une texture extraite des informations d'image sur des plans définis par une surface créée de manière fictive autour dudit véhicule en se basant sur les informations d'environnement en trois dimensions et sur les résultats détectés du moyen de détection d'informations du véhicule ; et

un moyen d'affichage (6) pour afficher l'image d'affichage, dans lequel ledit moyen (5) de création d'image d'affichage est aménagé pour changer la cartographie de la texture chaque fois que le lieu du point de vue dans l'environnement en 3D est déplacé.

2. Dispositif de surveillance de circonstances pour un véhicule selon la revendication 1,

dans lequel le moyen (2) de détection d'informations de véhicule détecte un état mobile du véhicule au moins entre deux positions du véhicule ;

dans lequel le moyen de capture d'image (1) comprend au moins un dispositif de capture d'image fixé dans une position prédéterminée du véhicule ; et

dans lequel le moyen (3) de construction d'informations d'environnement en trois dimensions construit les informations d'environnement en trois dimensions de l'environnement du véhicule en se basant sur l'image prise dans lesdites au moins deux positions différentes du véhicule par le dispositif de capture d'image (1).

3. Dispositif de surveillance de circonstances pour un véhicule selon la revendication 2, dans lequel le moyen (2) de détection d'informations du véhicule comprend un détecteur de vitesse (10) pour détecter une vitesse du véhicule et mesure une distance de déplacement du véhicule au moins entre lesdites deux positions en se basant sur un résultat détecté du détecteur de vitesse.

4. Dispositif de surveillance de circonstances pour un véhicule selon l'une quelconque des revendications 1 à 3, comprenant en outre :

un moyen de détermination (7) pour déterminer une image d'affichage prédéterminée.

5. Dispositif de surveillance de circonstances pour un véhicule selon la revendication 4, dans lequel le moyen de détermination (7) détermine l'image d'affichage prédéterminée par manipulation d'un opérateur du véhicule.

6. Dispositif de surveillance de circonstances pour un véhicule selon la revendication 4, dans lequel le moyen de détermination (7) détermine automatiquement l'image d'affichage en se basant sur un état prédéterminé concernant le véhicule et l'environnement du véhicule.

7. Dispositif de surveillance de circonstances pour un véhicule selon la revendication 6, dans lequel l'image d'affichage est automatiquement déterminée en se basant sur une relation de position entre le véhicule et l'élément objectif de l'environnement du véhicule.

8. Dispositif de surveillance de circonstances pour un véhicule selon l'une quelconque des revendications 1 à 7, dans lequel au moins l'une des images d'affichage correspond à une image montrant plongeant sur l'environnement du véhicule.

9. Dispositif de surveillance de circonstances pour un véhicule selon l'une quelconque des revendications 1 à 7, dans lequel au moins l'une des images d'affichage correspond à une image pour afficher une relation de position entre un élément objectif disposé devant le véhicule et une partie avant du véhicule.

10. Dispositif de surveillance de circonstances pour un véhicule selon l'une quelconque des revendications 1 à 7, dans lequel au moins l'une des images d'affichage correspond à une image pour afficher une relation de position entre un élément objectif disposé à l'arrière du véhicule et une partie arrière du véhicule.

**11.** Dispositif de surveillance de circonstances pour un véhicule selon l'une quelconque des revendications 1 à 7, dans lequel au moins l'une des images d'affichage correspond à une image pour afficher une relation de position entre un élément objectif disposé sur un côté du véhicule et une partie latérale du véhicule.

**12.** Dispositif de surveillance de circonstances pour un véhicule selon l'une quelconque des revendications 1 à 7, dans lequel au moins l'une des images d'affichage correspond à une image pour afficher une relation de position entre un élément objectif entourant un coin du véhicule et le coin du véhicule.

**13.** Dispositif de surveillance de circonstances pour un véhicule selon l'une quelconque des revendications 1 à 12, dans lequel ledit moyen (5) de création d'image d'affichage est aménagé pour créer une image d'affichage correspondant à une image qui comprend une partie ou l'ensemble des informations de l'environnement en trois dimensions entourant le véhicule en utilisant un traitement prédéterminé d'aspects extérieurs de structures concernant des informations sur des structures pour exprimer l'environnement en trois dimensions.

**14.** Dispositif de surveillance de circonstances pour un véhicule selon l'une quelconque des revendications 1 à 13, dans lequel ledit moyen (5) de création d'image d'affichage est aménagé pour utiliser des informations sur des structures en cartographiant la texture sur des plans n'ayant pas nécessairement une signification physique lors de la cartographie de la texture acquise par ledit moyen de capture d'image (1).

**15.** Dispositif de surveillance de circonstances pour un véhicule selon la revendication 14, dans lequel lesdits plans sont des plans horizontaux et des plans verticaux.

**16.** Dispositif de surveillance de circonstances pour un véhicule selon l'une quelconque des revendications 1 à 13, dans lequel ledit moyen (5) de création d'image d'affichage adapte en continu la géométrie de l'environnement en trois dimensions en fonction de l'environnement en trois dimensions lui-même.

**17.** Dispositif de surveillance de circonstances pour un véhicule selon l'une quelconque des revendications 1 à 16, dans lequel ledit moyen (5) de création d'image d'affichage superpose une image du véhicule à l'image d'affichage.

**18.** Dispositif de surveillance de circonstances pour un véhicule selon l'une quelconque des revendications 1 à 17, dans lequel ladite image d'affichage est une image panoramique.

```
        ┌─────────────────┐                          ┌─────────────────┐
        │       (1)       │                          │       (6)       │
        │ Image capture   │                          │ Displaying means│
        │     means       │                          │                 │
        └────────┬────────┘                          └────────▲────────┘
                 │                                            │
                 ▼                                            │
┌──────────┐  ┌─────────────────────────┐      ┌─────────────────────────┐
│   (4)    │◄─┤          (3)            ├─────►│          (5)            │
│ Storing  ├─►│ Three dimensional       │      │ Displaying image        │
│  means   │  │ environment information │      │ creation means          │
└────▲─────┘  │ constructing means      │      └────────▲────────────────┘
     │        └───────────▲─────────────┘               │
     │                    │                             │
     │        ┌───────────┴─────────────┐               │
     └────────┤          (2)            ├───────────────┘
              │ Vehicle information     │
              │ detection means         │
              └─────────────────────────┘
```

**Figure 1**

```
        ┌─────────────────┐                          ┌─────────────────┐
        │       (1)       │                          │       (6)       │
        │ Image capture   │                          │ Displaying means│
        │     means       │                          │                 │
        └────────┬────────┘                          └────────▲────────┘
                 │                                            │
                 ▼                                            │
┌──────────┐  ┌─────────────────────────┐      ┌─────────────────────────┐
│   (4)    │◄─┤          (3)            ├─────►│          (5)            │
│ Storing  ├─►│ Three dimensional       │      │ Displaying image        │
│  means   │  │ environment information │      │ creation means          │
└────▲─────┘  │ constructing means      │      └────────▲────────────────┘
     │        └───────────▲─────────────┘               │
     │                    │                             │
     │        ┌───────────┴─────────────┐   ┌───────────┴─────────────┐
     └────────┤          (2)            ├───┤          (7)            │
              │ Vehicle information     │   │ Determination means     │
              │ detection means         │   │                         │
              └─────────────────────────┘   └─────────────────────────┘
```

Figure 2

Figure 3

| | |
|---|---|
| ① Camera | ⑪ Image drawing module |
| | ⑥ Monitor |
| ⑫ Image recognition module | |
| ⑧ Shift lever switch | |
| ⑨ Steering angle sensor | CPU |
| ⑩ Wheel speed sensors | |
| | ④ Memory |

Figure 4

Figure 5

Figure 6

Figure 7

Figure 8

Figure 9 — EP 1 462 762 B1

Figure 9

Figure 10

Side face

Object (remove from environment information)

Road surface

Plane to be removed from road surface

Figure 11

Vertical elements

Horizontal elements

Figure 12

Camera used to texture element 1 when the view point is in area 1

Camera used to texture element 1 when the view point is in area 2

Camera 1    Camera 2    Camera 3    Camera 4    Camera 5    Camera 6

A

B

Area 1

Area 2

No texture update

Virtual position

New Virtual position after texture update

Vertical textured element 1

Vertical element 2

Wrong Position in real world    P

Position in real world

Figure 13

Figure 14

Figure 15

Reproduced object

Paste it on by projection

Image acquired by filming method

Figure 16

Reproduced road surface

Image acquired by filming method

Figure 17

Wall face in the environment around a car that is virtually constructed

Image acquired by filming method

Figure 18

Vertical elements can have different sizes or size
varying according to the view point

Figure 19

Image to display

Monitor

Figure 20

Display

Monitor

Image to display

Figure 21

Display

Monitor

Image to display

Figure 22

Display

Monitor

Image to display

Figure 23

Display

Monitor

Image to display

Figure 24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 62278477 A
- JP H01141137 A
- JP 2001187553 A
- JP 2002052999 A
- JP H0848198 A
- EP 1094337 A2
- EP 1288072 A2
- EP 1005234 A2

**Non-patent literature cited in the description**

- **Grün A. ; Wang X.** A new concept for the management of 3D city models in a hybrid GIS. *CyberCity Spatial Information System (SIS,* 1999, 121-128
- **Ioannis Stamos ; Peter K. Allen.** 3D Model Construction Using Range and Image Data submitted to CVPR 2000. *Department of Computer Science*
- **KANATANI, Kenichi.** Mathematics of Spatial Data. *Mathematics of Spatial Data,* 1995, 161-162